# EUROPÄISCHE PATENTSCHRIFT

(11) **EP 2 295 852 B1**
(45) Veröffentlichungstag und Bekanntmachung des Hinweises auf die Patenterteilung: **27.05.2015**
(21) Anmeldenummer: 10008912.7
(22) Anmeldetag: 27.08.2010
(51) Int. Cl.: F21V 7/00, G03B 15/05

(54) **Reflektoranordnung**
Reflector arrangement
Agencement de réflecteur

(30) Priorität: 10.09.2009 DE 102009040753
(43) Veröffentlichungstag der Anmeldung: 16.03.2011
(73) Patentinhaber: Münz, Christoph, 88069 Tettnang (DE)
(72) Erfinder: Hirt, Wolfgang, 88099 Neukirch (DE)
(74) Vertreter: Otten, Herbert

(56) Entgegenhaltungen:
- EP-A1- 0 126 281
- CH-A- 115 022
- FR-A1- 2 583 500
- US-A- 1 300 202
- US-A- 1 661 077
- US-A- 1 913 517
- US-A- 3 354 343
- US-A- 3 588 492
- US-A- 3 609 340
- US-A- 3 679 893
- US-A- 4 379 322

## Beschreibung

Die Erfindung betrifft ein Blitzlicht für Geschwindigkeitsüberwachungsanlagen für Fahrzeuge im fliessenden Verkehr.

### Stand der Technik:

Reflektoranordnungen zur Erzeugung eines vorgegebenen Lichtprofils sind in einer Vielzahl von unterschiedlichen Ausführungsformen bekannt. Beispielsweise werden Reflektoranordnungen in Beleuchtungsvorrichtungen für Geschwindigkeitsüberwachungsanlagen für Fahrzeuge im fließenden Verkehr verwendet. Für eine optimierte Bilddarstellung des Fahrzeuges und des Fahrers bei Dunkelheit ist es erforderlich, dass beispielsweise das Nummernkennzeichen des Fahrzeuges aufgrund seiner hohen Reflexionseigenschaften im Moment der Bildaufnahme mit einem schwächeren Licht beleuchtet wird als der Fahrer im Fahrzeug. Aus dem Stand der Technik, beispielsweise aus der US 3 679 893, der US 4 379 322 oder der US 3 354 343 sind Reflektoranordnungen bekannt, bei welchen zwei oder mehrere verschieden ausgeformte Abschnitte von Reflektorrinnen durch Überlagerung ihrer Brennachsen mit einer Lichtquelle zu anwendungsgemäß bevorzugten Lichtprofilen führen. Derartige Anordnungen haben jedoch den Nachteil, dass stets Streustrahlungen oder direkt ausgesandte Lichtstrahlen das bevorzugte Strahlprofil stören können.

Darüber hinaus stellen die Dokumente EP 0 126 281 A1, US 1 913 517 A, CH 115 022 A, FR 2 583 500 A1, US 3 588 492 A, US 1 661 077 A, US 1 300 202 A sowie US 3 609 340 A technologischen Hintergrund dar.

Eine Ausführungsform einer Reflektoranordnung ist mit der Druckschrift DE 10 2006 044 019 Al gezeigt, in welcher die Reflektoranordnung aus mindestens einem rotationsellipsoiden Abschnitt, einem weiteren Hohlspiegel und einer im Brennpunkt des rotationsellipsoiden Abschnitts angeordnete Lichtquelle gezeigt ist, wobei der Rotationsellipsoidenabschnitt dem Hohlspiegel in einer Gegenüberstellung angeordnet ist. Die Lichtquelle ist im ersten Brennpunkt des rotationsellipsoiden Abschnitts angeordnet, wobei der zweite Brennpunkt rotationsellipsoiden Abschnitts und der Brennpunkt des Hohlspielgels zusammenfallen. Die auf den rotationsellipsoiden Abschnitt treffenden Lichtstrahlen der Lichtquelle werden auf den Hohlspiegel reflektiert und verlassen die Reflektoranordnung als geformtes Bündel senkrecht zur Grundebene.

Nachteilig ist, dass bei der Anordnung von mehreren Rotationsellipsoidabschnitten zur Verbesserung der Lichtausbeute bzw. zur Bildung eines vorherbestimmbaren Lichtprofils, wie beispielsweise eines Lichtbalkens, zu jedem einzelnen rotationsellipsoiden Abschnitt eine zugehörige Lichtquelle angeordnet werden muss. Darüber hinaus ist die Bildung einer Reflektoranordnung von mehreren, miteinander verbundenen Rotationsellipsoidabschnitten material- und montageintensiv sowie optisch sehr komplex.

Aus diesem Grunde hat sich die Erfindung die Aufgabe gestellt, eine Reflektoranordnung zur Erzeugung eines definierten Lichtprofils derart weiterzubilden, dass eine einfache und kostengünstige Anordnung von Reflektoren mit einer verbesserten Lichtausbeute zur Verfügung gestellt wird.

Zur Lösung der Aufgabe ist die Erfindung durch die Merkmale des Patentanspruchs 1 gekennzeichnet.

Vorteilhafte Erweiterungen der Erfindung sind in den abhängigen Ansprüchen beschrieben.

### Definitionen

Die in der nachfolgenden Beschreibung und in den Ansprüchen verwendeten Begriffe betreffen zum Teil eine sich im Raum erstreckende ellipsenförmige bzw. eine parabelförmige Reflektorrinne.

Eine Ellipse ist üblicherweise durch eine Hauptachse und eine zur Hauptachse rechtwinklig angeordnete Nebenachse definiert, welche durch die Scheitelpunkte der Ellipse verlaufen. Auf der Hauptachse liegen zwei Brennpunkte. Ein von einem ersten Brennpunkt ausgehender Lichtstrahl wird an einer spiegelnden Ellipsenkurve derart reflektiert, dass er den zweiten Brennpunkt trifft. Bei einer Ellipsenrinne wird ein elliptischer Querschnitt entlang einer geraden, sich in den Raum erstreckenden Richtung verlängert (extrudiert). Bei derartigen Ellipsenkörpern bilden die Brennpunkte Brennachsen. Durch die parallel verlaufenden Brennachsen wird entlang der Hauptachse jedes elliptischen Querschnitts eine Hauptebene gebildet.

Bei einer Parabel ist eine achsensymmetrische Kurve, bei welcher eine Verbindungslinie zwischen einem Brennpunkt und dem Scheitelpunkt der Kurve die Symmetrieachse der Parabel bildet. Ein parallel zur Symmetrieachse einfallender Lichtstrahl wird an einer spiegelnden Parabelform derart reflektiert, dass der resultierende Lichtstrahl durch den Brennpunkt der Parabel verläuft. Bei einer Parabelrinne wird ein parabelförmiger Querschnitt entlang einer geraden, sich in den Raum erstreckenden Richtung verlängert (extrudiert). Die Brennpunkte der einzelnen Querschnitte bilden eine Brennachse und die Scheitelpunkte eine Scheitelachse. Durch die Scheitelachse und die Brennachse wird eine so genannte Scheitelebene aufgespannt, welche die Symmetrieachsen der einzelnen Querschnitte enthält.

### Offenbarung der Erfindung:

Die Erfindung geht von einer Reflektoranordnung zur Erzeugung eines Lichtprofils aus, wobei ein erster Reflektor als Reflektorrinne mit mindestens einer Brennachse und mindestens einer Scheitelebene ausgebildet ist, und ein zweiter Reflektor zur Reflexion des Lichtes mindestens eines Leuchtmittels in die Brennachse des ersten Reflektors ausgebildet ist.

Der Kern der Erfindung liegt darin, dass der zweite Reflektor als Reflektorrinne mit einer ersten und einer zweiten Brennachse sowie einer durch diese verlaufenden Hauptebene ausgebildet ist.

Die Ausbildung des zweiten Reflektors als Reflektorrinne hat den Vorteil, dass der zweite Reflektor kostengünstig und einfach, vorzugsweise als Endlos-Biegeprofil hergestellt werden kann. Zusätzlich könnte im Einzelfall auch lediglich ein Leuchtmittel zur Erzeugung eines Lichtprofils ausreichen.

In einer bevorzugten Ausgestaltung der Erfindung ist vorgesehen, dass der erste Reflektor als eine offene Rinne mit einem Querschnitt in Form eines Parabelabschnitts und der zweite Reflektor als eine offene Rinne mit einem Querschnitt in Form eines Ellipsenabschnitts ausgebildet ist. Diese Formausbildung der beiden Reflektoren erlaubt die Ausbildung eines definierten Lichtprofils bei hoher Lichtausbeute, beispielsweise eines Leuchtbalkens für Verkehrsüberwachungsanlagen.

Es ist in einer weiteren, bevorzugten Ausgestaltung der Erfindung vorgesehen, dass das Leuchtmittel vorzugsweise stabförmig, insbesondere einstückig ausgebildet ist und im Bereich der ersten Brennachse des zweiten Reflektors angeordnet ist. Die stabförmige, insbesondere einstückige Ausführungsform des Leuchtmittels bildet ein ansatzweise lineares Lichtprofil, welches eine gleichmäßige Lichtverteilung entlang der ersten Brennachse des zweiten Reflektors ermöglicht. Aufgrund der technisch bedingten körperlichen Ausdehnung eines Leuchtmittels (beispielsweise einer Stab-Blitzlampe) ist die strahlenoptisch ideale Anordnung "als auf der Brennachse liegend" nicht realisierbar. Die Lichtquelle muss aber im Bereich der Brennachse liegen, um die Projektion in die zweite Brennachse optimal ausnutzen zu können.

Überdies ist es in einer weiteren Ausgestaltung der Erfindung vorgesehen, dass die Hauptebene der zweiten Reflektorrinne und die Scheitelebene der ersten Reflektorrinne in einem Winkel ungleich 90° zueinander stehen. Die Anordnung der Reflektoren zueinander erlaubt eine Einflussnahme auf eventuelle Streulichtstrahlen, welche nicht dem idealisierten Strahlengang durch die einzelnen Brennachsen folgen.

In einer weiteren Ausgestaltung der Erfindung ist es vorgesehen, dass die Brennachse der parabelförmigen Rinne deckungsgleich mit der zweiten Brennachse der ellipsenförmigen Rinne verläuft. Die Deckungsgleichheit der beiden Brennachsen der Reflektoren ermöglicht eine Reflexion der Lichtstrahlen aus der Lichtquelle an der parabelförmigen Reflektorrinne mit einer hohen Anzahl von parallel zur Scheitelebene der parabelförmigen Reflektorrinne austretenden Lichtstrahlen.

Es ist in einer weiteren, bevorzugten Ausgestaltung der Erfindung vorgesehen, dass ein Rand der zweiten Reflektorrinne auf der Scheitelebene der parabelförmigen Rinne verläuft. Dieser Verlauf eines Randes ermöglicht eine maximale Nutzung des Ellipsoidenverlaufs als Reflexionsfläche, ohne die Erzeugung von Abschattungen am Paraboloiden. Dies bildet eine Kante an einer unteren Grenze des Lichtprofils.

Überdies ist es in einer weiteren bevorzugten Ausgestaltung der Erfindung vorgesehen, dass vom Leuchtmittel ausgehende reflektierte Lichtstrahlen nach dem Verlassen der Reflektoranordnung ein abgegrenztes Lichtprofil mit einem Hauptbeleuchtungsbereich oberhalb der Scheitelebene der parabelförmigen Reflektorrinne und einem diffus beleuchteten Umgebungsbereich unterhalb der Scheitelebene der parabelförmigen Reflektorrinne bilden.

Der auf der Scheitelebene der parabelförmigen Rinne verlaufende Rand der zweiten Reflektorrinne verhindert den parallelen Austritt von Lichtstrahlen aus der Reflektoranordnung unterhalb dieser Scheitelebene. Divergente Lichtstrahlen, welche oberhalb der Scheitelebene reflektiert wurden bilden außerhalb der Reflektoranordnung einen Lichtprofilbereich aus, welcher unterhalb der Scheitelebene lediglich schwaches, diffuses Streulicht beinhaltet.

Es ist in einer weiteren, bevorzugten Ausgestaltung der Erfindung vorgesehen, dass sich an der parabelförmigen Rinne im Bereich der ellipsenförmigen Rinne unterhalb der Scheitelebene ein Freiformreflektor anschließt. Der Anschluss eines Freiformreflektors an die parabelförmige Rinne ermöglicht eine verbesserte Lichtführung für nicht durch die zweite Brennachse des zweiten Reflektors verlaufende Lichtstrahlen. Diese können durch eine angepasste Freiformreflektor-Form derart umgelenkt werden, dass sie dem geforderten Lichtprofil entsprechen oder zumindest keine störende Streulichtbildung verursachen.

In einer weiteren bevorzugten Ausgestaltung der Erfindung ist vorgesehen, dass jeder vom Leuchtmittel ausgehende Lichtstrahl mindestens eine Reflexion an mindestens einer Oberfläche erfährt.Die vom Leuchtmittel ausgehenden Lichtstrahlen werden aufgrund der Zuordnung der beiden Reflektorrinnen an der Oberfläche der ellipsenförmigen und/oder parabelförmigen Reflektorrinne reflektiert bevor sie die Reflektoranordnung verlassen. Dadurch kann die Menge an nicht kontrollierbaren Lichtstrahlen verringert werden.

Eine Anwendung der Erfindung betrifft eine Lichtquelle, vorzugsweise ein Blitzlicht, umfassend eine Reflektoranordnung, Seitenwände an den Stirnseiten der Reflektorrinnen und eine Energieversorgung, wobei die Reflektoranordnung nach einem der bevorzugten Ausführungsformen der Erfindung ausgebildet ist.

Weitere Merkmale der Erfindung gehen aus der nachfolgenden Figurenbeschreibung und den Zeichnungen hervor.

Dabei zeigen:
- Figur 1: eine Seitenansicht einer Reflektoranordnung mit einer parabelförmigen und einer ellipsenförmigen Reflektorrinne und einem Freiformreflektor;
- Figur 2: eine ellipsenförmige Reflektorrinne in Schnittprojektion;
- Figur 3: eine perspektivische Darstellung einer Reflektoranordnung mit Seitenwänden und Lichtquelle.

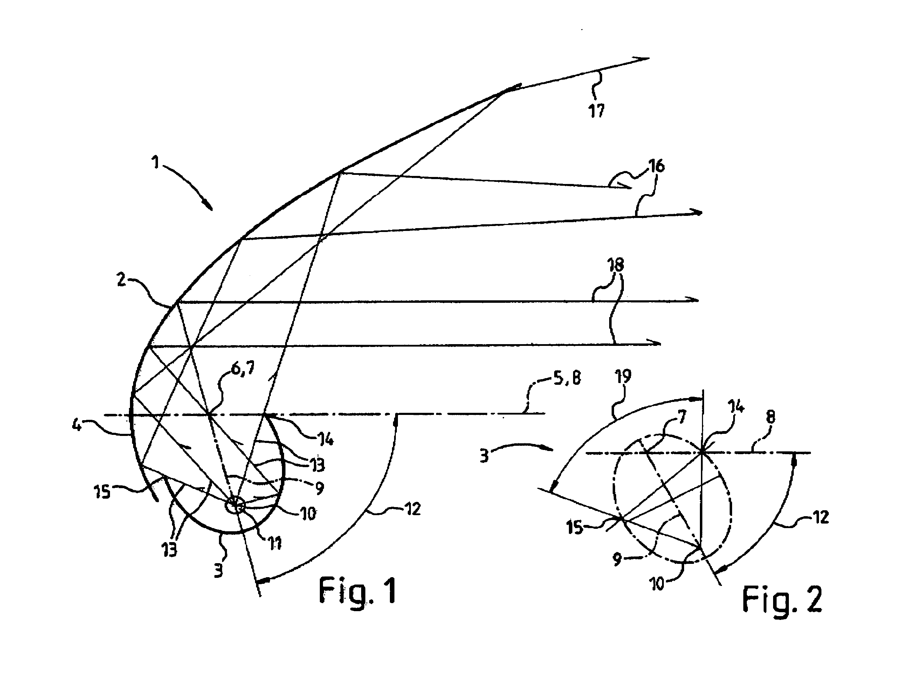

In Figur 1 ist eine Seitenansicht einer Schnittprojektion einer Reflektoranordnung 1 gezeigt, welche eine parabelförmige Reflektorrinne 2 und eine ellipsenförmige Reflektorrinne 3 umfasst, wobei sich an die parabelförmige Reflektorrinne 2 ein Freiformreflektor 4 anschließt.

Eine in den Schnittprojektionen der parabelförmigen Reflektorrinne 2 verlaufende Scheitelachse 5 spannt in räumlicher Verlängerung eine Scheitelebene 8 auf, in welcher der Brennpunkt der Parabel als in der zur Scheitelebene 8 verlaufende Brennachse 6 ausgebildet ist. In dem beschriebenen Ausführungsbeispiel verläuft die Scheitelachse 5 der parabelförmigen Reflektorrinne 2 in der Scheitelebene 8 der Parabel.

In der ellipsenförmigen Reflektorrinne 3 verläuft die Hauptachse 9 durch die beiden Brennpunkte der Ellipse, welche in der räumlichen Verlängerung des ellipsenförmigen Reflektorrinne 3 als senkrecht zur Hauptachse 9 verlaufenden ersten und zweiten Brennachse 10, 7 ausgebildet sind. Die Hauptachse 9 spannt in der räumlichen Verlängerung der ellipsenförmigen Reflektorrinne 3 eine Hauptebere auf, in welcher die Brennachsen 10, 7 verlaufen.

In dem Bereich der ersten Brennachse 10 der ellipsenförmigen Reflektorrinnen 3 ist ein stabförmiges Leuchtmittel 11 angeordnet, welches vorzugsweise einstückig ist. Die sich in der räumlichen Verlängerung des ellipsenförmigen Reflektors 3 sich aufspannende Hauptebene und die scheitelebene 8 der parabelförmigen Reflektorrinne 2 stehen in einem Winkel 12 zueinander, welcher ≠ 90° ist. Vorzugsweise ist der Winkel 12 < 90°.

Die Öffnung der sich räumlich erstreckenden ellipsenförmigen Reflektorrinne 3 ist mittels zwei Kantenlinien 14, 15 definiert, wobei die ellipsenförmige Reflektorrinne 3 derart angeordnet ist, dass die Kantenlinie 14 in der Scheitelebene 8 der sich räumlich erstreckenden parabelförmigen Reflektorrinne 2 verläuft. Diese Kantenlinie 14 bildet im Lichtprofil ebenfalls eine abgrenzende Kantenlinie aus, wobei die vom Leuchtmittel 11 ausgehenden Lichtstrahlen 13 nach dem Verlassen der Reflektoranordnung 1 oberhalb der von der Kantenlinie 14 im Lichtprofil gebildeten Kantenlinie einen Hauptbeleuchtungsbereich und unterhalb der gebildeten Kantenlinie im Lichtprofil einen diffus beleuchteten Umgebungsbereich ausbilden.

Die von dem Leuchtmittel 11 ausgehenden Lichtstrahlen 13 werden an der Innenseite der ellipsenförmigen Reflektorrinne 3 reflektiert und anschließend auf der Innenseite der parabelförmigen Reflektorrinne 2 bzw. des Freiformreflektors 4 weiter reflektiert und bilden nach dem Verlassen der Reflektoranordnung 1 das Lichtprofil.

Die von dem Leuchtmittel 11 ausgehenden Lichtstrahlen 13, welche durch die zweite Brennachse 7 der ellipsenförmigen Reflektorrinne 3 verlaufen, werden an der Innenseite der parabelförmigen Reflektorrinne 2 reflektiert und verlassen die Reflektoranordnung 1 nahezu parallel zur Scheitelebene 8. Die parallel verlaufenden Lichtstrahlen 13 bilden im Lichtprofil den Hauptbeleuchtungsbereich.

Die Lichtstrahlen 13, welche ausgehend von dem Leuchtmittel 11 nicht durch die zweite Brennachse 7 der ellipsenförmigen Reflektorrinne 3 verlaufen, verlassen die Reflektoranordnung 1 beispielsweise als divergente Lichtstrahlen 16 oder als Verluststrahlen 17, in Abhängigkeit ihrer Reflexion an der Innenseite der parabelförmigen Reflektorrinne. Die divergenten Lichtstrahlen bilden hierbei den im unteren Bereich des Lichtprofils angeordneten diffus beleuchteten Umgebungsbereich, welcher durch den darüber sich bildenden Hauptbeleuchtungsbereich des Lichtprofils abgegrenzt ist.

Als Verluststrahlen 17 werden diejenigen Lichtstrahlen 13 bezeichnet, welche sich aufgrund ihrer Reflexion außerhalb des zu bildenden Lichtprofils befinden.

Die Figur 2 zeigt eine Schnittprojektion einer ellipsenförmigen Reflektorrinne 3, deren Öffnung durch Kantenpunkte definiert ist, die in der räumlichen Verlängerung der ellipsenförmigen Reflektorrinne als Kantenlinien 14, 15 verlaufen. Auf der Hauptachse 9 verläuft ein erster und zweiter Brennpunkt 10, 7, welche in der räumlichen Verlängerung der ellipsenförmigen Reflektorrinne 3 als erste und zweite Brennachse 10 ausgebildet sind. Die in der räumlichen Verlängerung der ellipsenförmigen Reflektorrinne 3 durch die Brennachsen 10, 7 sich aufspannende Ebene ist zur Symmetrieebene 8 der parabelförmigen Reflektorrinne 2 in einem Winkel 12 angeordnet, welcher vorzugsweise < 90° ist.

Ausgehend von der ersten Brennachse 10 der ellipsenförmigen Reflektorrinne bilden die beiden Kantenlinien 14 und 15 einen Öffnungswinkel 19, welcher vorzugsweise < 90° ist.

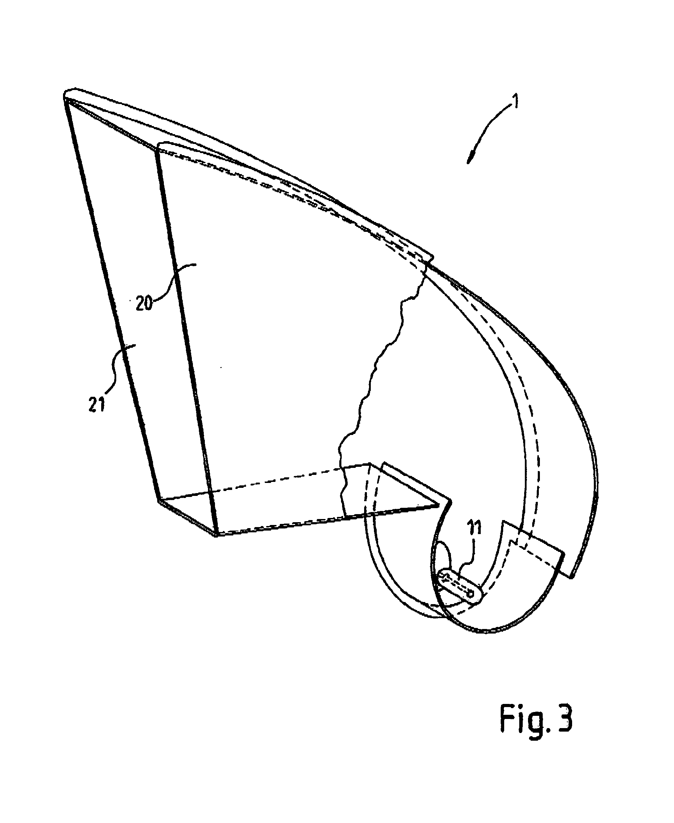

In Figur 3 ist eine perspektivische Seitenansicht einer Reflektoranordnung 1 gemäß Figur 1 gezeigt, wobei die Stirnseiten der parabelförmigen Reflektorrinne 2 und der ellipsenförmigen Reflektorrinne 3 mittels flächenförmig ausgebildeten Seitenwänden 20, 21 verschlossen sind. Dadurch bildet die Reflektoranordnung 1 einen rechteckigen Lichtkanal, wobei die von dem Leuchtmittel 11 ausgehenden Lichtstrahlen 13 an der parabelförmigen Reflektorrinne 2 und der ellipsenförmigen Reflektorrinne 3 reflektiert werden. Die beiden Seitenwände 20, 21 verhindern ein seitliches Austreten von reflektierenden Lichtstrahlen 13, wodurch die Bildung eines vorgegebenen Lichtprofils mit einem Hauptbeleuchtungsbereich und einem diffus beleuchteten Umgebungsbereich verbessert wird. Weiterhin kann die Anordnung von reflektierenden Seitenwänden 20, 21 die Menge von Verluststrahlen verringern.

Das Leuchtmittel 11 ist vorzugsweise zur Erzeugung von Blitzlicht vorgesehen, wobei das durch die Reflektoranordnung 1 erzeugte Lichtprofil beispielsweise zur Beleuchtung eines sich bewegenden Objektes, vorzugsweise eines Fahrzeuges, mit einem darin sitzenden Fahrer verwendet wird. Das durch die Reflektoranordnung 1 gebildete Lichtprofil findet beispielsweise in einer Fahrzeugüberwachungsanlage Anwendung. Es ist vorteilhaft, dass das Lichtprofil in einen Hauptbeleuchtungsbereich und einen diffus beleuchteten Umgebungsbereich unterteilt ist, wobei stark reflektierende Objekte, wie beispielsweise ein Kfz-Kennzeichen an Fahrzeugen, vorzugsweise im diffus beleuchteten Umgebungsbereich des Lichtprofils liegen, da zur ausreichenden Beleuchtung dieser Objekte weniger Lichtstrahlen im Vergleich zu normal oder schwach reflektierenden Objekten erforderlich sind.

### Bezugszeichenliste:

- 1: Reflektoranordnung
- 2: parabelförmige Reflektorrinne
- 3: ellipsenförmige Reflektorrinne
- 4: Freiformreflektor
- 5: Scheitelachse parabelförmige Reflektorrinne
- 6: Brennachse parabelförmige Reflektorrinne
- 7: zweite Brennachse ellipsenförmige Reflektorrinne
- 8: Scheitelebene parabelförmige Reflektorrinne
- 9: Hauptachse ellipsenförmige Reflektorrinne
- 10: erste Brennachse ellipsenförmige Reflektorrinne
- 11: Leuchtmittel
- 12: Winkel
- 13: Lichtstrahlen
- 14: Kantenlinie
- 15: Kantenlinie
- 16: divergenter Lichtstrahl
- 17: Verluststrahl
- 18: Hauptstrahl
- 19: Öffnungswinkel
- 20: Seitenwand
- 21: Seitenwand

## Patentansprüche

1. Blitzlicht für Geschwindigkeitsüberwachungsanlagen für Fahrzeuge im fliessenden Verkehr, umfassend eine Reflektoranordnung (1), Seitenwände (20, 21) an den Stirnseiten von Reflektorrinnen (2, 3) und eine Energieversorgung,
- wobei die Reflektoranordnung (1) zur Erzeugung eines Lichtprofils, wiederum mindestens zwei Reflektoren umfassend ausgebildet ist,
- wobei der erster Reflektor als parabolförmige Reflektorrinne (2) mit einer Brennachse und mit einer Scheitelachse ausgebildet ist, wobei die Brennachse und die Scheitelachse eine Scheitelebene definieren,
- und der zweiter Reflektor zur Reflexion des Lichtes mindestens eines Leuchtmittels in die Brennachse des ersten Reflektors ausgebildet ist,
- wobei der zweite Reflektor als ellipsenförmige Reflektorrinne (3) mit einer ersten und einer zweiten Brennachse (10, 7) sowie einer durch diese verlaufenden Hauptebene ausgebildet ist,
- wobei jeder vom Leuchtmittel ausgehende Lichtstrahl (13) mindestens eine Reflexion an mindestens einer Oberfläche der Reflektorrinnen (2, 3, 4) erfährt wobei an der parabelförmigen Rinne (2) im Bereich der ellipsenförmigen Rinne (3) unterhalb der Scheitelebene (8) ein Freiformreflektor (4) sich anschließt.

2. Blitzlicht nach Anspruch 1, **dadurch gekennzeichnet, dass** der erste Reflektor (2) als eine offene Rinne mit einem Querschnitt in Form eines Parabelabschnitts und der zweite Reflektor (3) als eine offene Rinne mit einem Querschnitt in Form eines Ellipsenabschnitts gebildet ist.

3. Blitzlicht nach einem der vorhergehenden Ansprüche, **dadurch gekennzeichnet, dass** das Leuchtmittel (11) vorzugsweise stabförmig, insbesondere einstückig ausgebildet ist und im Bereich der ersten Brennachse (10) des zweiten Reflektors (3) angeordnet ist.

4. Blitzlicht nach einem der vorhergehenden Ansprüche, **dadurch gekennzeichnet, dass** die Hauptebene (5) der zweiten Reflektorrinne und die Scheitelebene (8) der ersten Reflektorrinne einen Winkel ≠ 90° bilden.

5. Blitzlicht nach Anspruch 2, **dadurch gekennzeichnet, dass** die Brennachse (6) der parabelförmigen Reflektorrinne (3) deckungsgleich mit der Brennachse (7) der ellipsenförmigen Reflektorrinne (3) verläuft.

6. Blitzlicht nach Anspruch 2 oder 5, **dadurch gekennzeichnet, dass** ein Rand der zweiten Reflektorrinne (3) auf der Scheitelebene (8) der parabelförmigen Rinne (2) verläuft.

7. Blitzlicht nach Anspruch 2, 5 oder 6, **dadurch gekennzeichnet, dass** die vom Leuchtmittel (11) ausgehenden Lichtstrahlen (13) nach dem Verlassen der Reflektoranordnung (1) ein abgegrenztes Lichtprofil mit einem Hauptbeleuchtungsbereich oberhalb der Scheitelebene (8) und einem diffus beleuchteten Umgebungsbereich unterhalb der Scheitelebene (8) der parabelförmigen Reflektorrinne (2) bilden.

## Claims

1. A flash light for speed monitoring units for vehicles in flowing traffic, comprising a reflector arrangement (1), sidewalls (20, 21) on the front sides of reflector channels (2, 3) and an energy supply,
- wherein the reflector arrangement (1) for the generation of a light profile, is designed comprising in turn at least two reflectors,
- wherein the first reflector is designed as a parabolic reflector channel (2) with a focal axis and with a vertex axis, wherein the focal axis and the vertex axis define a vertex plane,
- and the second reflector is designed for reflection of the light at least of an illuminant into the focal axis of the first reflector,
- wherein the second reflector is designed as an elliptical reflector channel (3) with a first and a second focal axis (10, 7) as well as a main plane running through the latter,
- wherein each light beam (13) emanating from the illuminant undergoes at least one reflection on at least one surface of the reflector channels (2, 3, 4), wherein a free-form reflector (4) is attached to the parabolic channel (2) in the area of the elliptical channel (3) beneath the vertex plane (8).

2. A flash light according to claim 1, **characterized in that** the first reflector (2) is formed as an open channel with a cross section in the form of a parabolic section and the second reflector (3) as an open channel with a cross section in the form of an elliptical section.

3. A flash light according to one of the preceding claims, **characterized in that** the illuminant (11) is designed preferably rod-shaped, in particular in one piece and is arranged in the area of the first focal axis (10) of the second reflector (3).

4. A flash light according to one of the preceding claims, **characterized in that** the main plane (5) of the second reflector channel and the vertex plane (8) of the first reflector channel form an angle ≠ 90º.

5. A flash light according to claim 2, **characterized in that** the focal axis (6) of the parabolic reflector channel (3) runs congruently with the focal axis (7) of the elliptical reflector channel (3).

6. A flash light according to claim 2 or 5, **characterized in that** an edge of the second reflector channel (3) runs on the vertex plane (8) of the parabolic channel (2).

7. A flash light according to claim 2, 5 or 6, **characterized in that** the light beams (13) emanating from the illuminant (11) after leaving the reflector arrangement (1) form a delimited light profile with a main lighting area above the vertex plane (8) and a diffusely lit surrounding area beneath the vertex plane (8) of the parabolic reflector channel (2).

## Revendications

1. Flash pour installations de surveillance de vitesse pour véhicules en circulation, comprenant un dispositif réflecteur (1), des parois latérales (20, 21) sur les faces frontales des canaux réflecteurs (2, 3) et une alimentation en énergie,
- le dispositif réflecteur (1) comprenant également, pour la production d'un profil de lumière, au moins deux réflecteurs
- le premier réflecteur étant conçu comme un canal réflecteur (2) de forme parabolique, avec un axe focal et avec un axe de sommet, l'axe focal et l'axe de sommet définissant un plan de sommet,
- et le deuxième réflecteur étant conçu pour la réflexion d'au moins un moyen d'éclairage vers l'axe focal du premier réflecteur,
- le deuxième réflecteur étant conçu comme un canal réflecteur (3) de forme elliptique, avec un premier et un deuxième axe focal (10, 7) ainsi qu'un plan principal traversant celui-ci,
- chaque rayon lumineux (13) sortant du moyen d'éclairage subissant au moins une réflexion sur au moins une surface des canaux réflecteurs (2, 3, 4), le canal (2) de forme parabolique se prolongeant, au niveau du canal (3) de forme elliptique, en dessous du plan de sommet (8), par un réflecteur de forme libre (4).

2. Flash selon la revendication 1, **caractérisé en ce que** le premier réflecteur (2) est conçu comme un canal ouvert avec une section transversale présentant la forme d'une portion de parabole et le deuxième réflecteur (3) comme un canal ouverte avec une section transversale présentant la forme d'une portion d'ellipse.

3. Flash selon l'une des revendications précédentes, **caractérisé en ce que** le moyen d'éclairage (11) présente, de préférence, la forme d'une tige, plus particulièrement d'une seule pièce, et est disposé au niveau du premier axe focal (10) du deuxième réflecteur (3).

4. Flash selon l'une des revendications précédentes, **caractérisé en ce que** le plan principal (5) du deuxième canal réflecteur et le plan de sommet (8) du premier canal réflecteur forment un angle différent de 90°.

5. Flash selon la revendication 2, **caractérisé en ce que** l'axe focal (6) du canal réflecteur (3) de forme parabolique coïncide avec l'axe focal (7) du canal réflecteur (3) de forme elliptique.

6. Flash selon la revendication 2 ou 5, **caractérisé en ce qu'**un bord du deuxième canal réflecteur (3) s'étend sur le plan de sommet (8) du canal (2) de forme parabolique.

7. Flash selon la revendication 2, 5 ou 6, **caractérisé en ce que** les rayon lumineux (13) sortant du moyen d'éclairage (11) forment, à la sortie du dispositif réflecteur (1), un profil de lumière délimité avec une zone principale d'éclairage au-dessus du plan de sommet (8) et une zone ambiante éclairée de manière diffuse en dessous du plan de sommet (8) du canal réflecteur (2) de forme parabolique.
